Europäisches Patentamt

(19) European Patent Office

Office européen des brevets

(11) Publication number: 0 240 500 B1

# EUROPEAN PATENT SPECIFICATION

(12)

(45) Date of publication of patent specification:
20.02.91 Bulletin 91/08

(51) Int. Cl.⁵: $B01D\ 46/46$

(21) Application number: 86900357.4

(22) Date of filing: 06.11.85

(86) International application number:
PCT/US85/02187

(87) International publication number:
WO 87/01959 09.04.87 Gazette 87/08

(54) SEPARATOR ASSEMBLY.

(30) Priority: 02.10.85 US 783037

(43) Date of publication of application:
14.10.87 Bulletin 87/42

(45) Publication of the grant of the patent:
20.02.91 Bulletin 91/08

(84) Designated Contracting States:
AT BE CH DE FR GB IT LI LU NL SE

(56) References cited:
DE-A- 433 056
GB-A- 2 158 732
US-A- 1 914 667
US-A- 2 135 750
US-A- 2 303 333
US-A- 2 783 786
US-A- 3 353 551
US-A- 3 410 288
US-A- 3 411 272

(56) References cited:
US-A- 3 421 296
US-A- 3 593 503
US-A- 3 612 024
US-A- 3 733 814
US-A- 3 823 532
US-A- 4 081 255
US-A- 4 231 769
US-A- 4 312 645
US-A- 4 361 423

(73) Proprietor: PARMATIC FILTER
CORPORATION
92 Newark Pompton Turnpike
Wayne New Jersey 07470 (US)

(72) Inventor: MAVROS, Stratos
585 Farmdale Road
Franklin Lakes, NJ 07470 (US)

(74) Representative: Atkinson, Ralph et al
Fitzpatricks Europe House World Trade Centre
London E1 9AA (GB)

## Description

The present invention relates to a separator assembly for removing particulate matter entrained in air passing through an air duct, wherein the duct is arranged to allow air flow in a first direction creating a pressure drop across said separator assembly.

Moisture separators are provided for gas turbines for marine applications, as the moisture particles in the air generally contain salt which, if they should be introduced into the turbine, would damage the component parts of the turbine, as for example, by chemical corrosion. Further, the dry particles entrained in the air, for example, sand and/or salt crystals, can cause "pitting" of the turbine components if they are not removed. However, by far the greatest concern is the moisture particles containing salt.

Although various types of separator assemblies have been proposed for use in marine applications to minimize the passage of air containing such particles to the turbine, it will also understood that of an even greater importance is the provision of a substantial air flow being maintained to the turbine. In fact, this is of such importance that it is deemed imperative that air always be delivered to the turbine, even if it means delivering air which might otherwise damage the turbine components, ie., air having moisture and/or salt therein.

Accordingly, in the past, doors or passageways, known as "Blow in" doors, have been provided in the air ducts adjacent to the moisture separators which are automatically opened if the pressure drop across the moisture separator increases too much, ie., beyond a predetermined limit which might otherwise result in the turbine being starved of air flow. In accordance with these prior art arrangements, unfiltered air is thus allowed to flow into the air duct, by-passing the moisture separator, to be delivered to the turbine.

Such an increase in the pressure drop across the moisture separator can result from freezing or icing up of the moisture separators when the ships on which they are mounted are in cold or icy waters since the moisture separators for gas on such ships are generally located high up on the ship where they are unprotected from the elements. For example, the moisture that is removed from the air by the moisture separator can freeze in the moisture separator, thereby significantly blocking the flow of air through the separator which, in turn, causes the pressure drop across the moisture separator to increase, and a consequent decrease in the amount of air being delivered to the turbine.

United States Patent Number 4,312,645 (assigned to the present Applicant) describes a simplified separator assembly for an air intake duct of a turbine device for normally removing particulate matter entrained in air being introduced into the turbine device, the air being introduced to flow through the air duct in a first direction.

Rather than providing a separate blow in door, the separating device itself is arranged to pivot so that, when released, it moves under the influence of the air flow. In another embodiment, disclosed in the aforesaid Patent, movement by the separating means, in the direction of the pressure drop across the separating means, may be effected by a positive moving device.

As used herein, the direction of the pressure drop is the direction of the force acting on the separating means due to the air flow. Thus it can be seen that failure of the retaining means, or failure of means for returning the separator to its normal (ie., closed) position, would result in the separator being left in the open position. Furthermore, when operating in very cold conditions, intermittent failure is common in equipment which functions perfectly well at normal operating temperatures. Thus, in response to a short-term blockage in the separator means, the assembly may be left permanently open resulting in excessive damage to the equipment (such as a gas turbine) the separator assembly is arranged to protect.

According to the present invention there is provided an air duct separator assembly for removing particulate matter entrained in air passing through an air duct, wherein the duct is arranged to allow air flow in a first direction creating a pressure drop across said separator assembly, said separator assembly comprising, separating means (10) for removing particulate matter entrained in the air passing therethrough, mounting means (15, 17) for mounting said separating means relative to said air duct so as to be moveable between a first position in which substantially all of the air passes through said separating means and a second position in which a large proportion of said air by-passes said separating means, characterised in that said separating means is moved from said first position by power-applying means (18) in a direction other than a direction having a component is the direction of the said pressure drop.

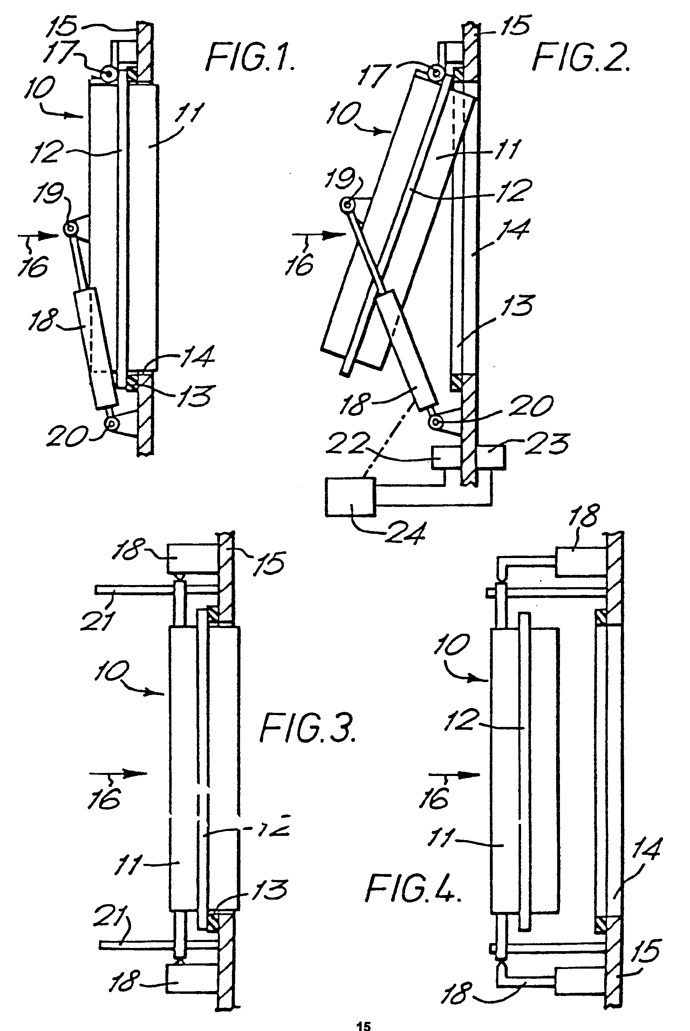

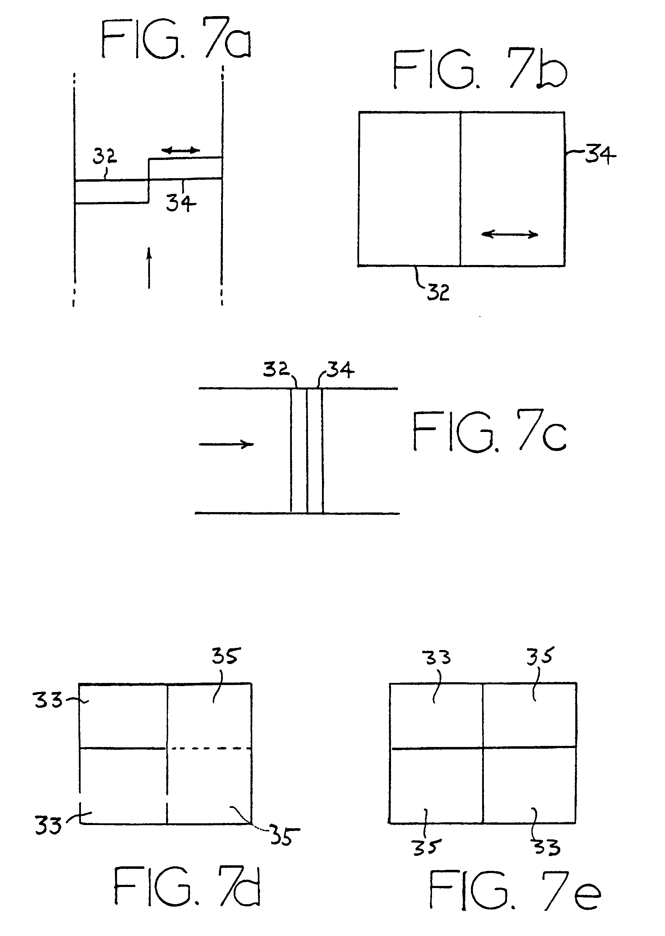

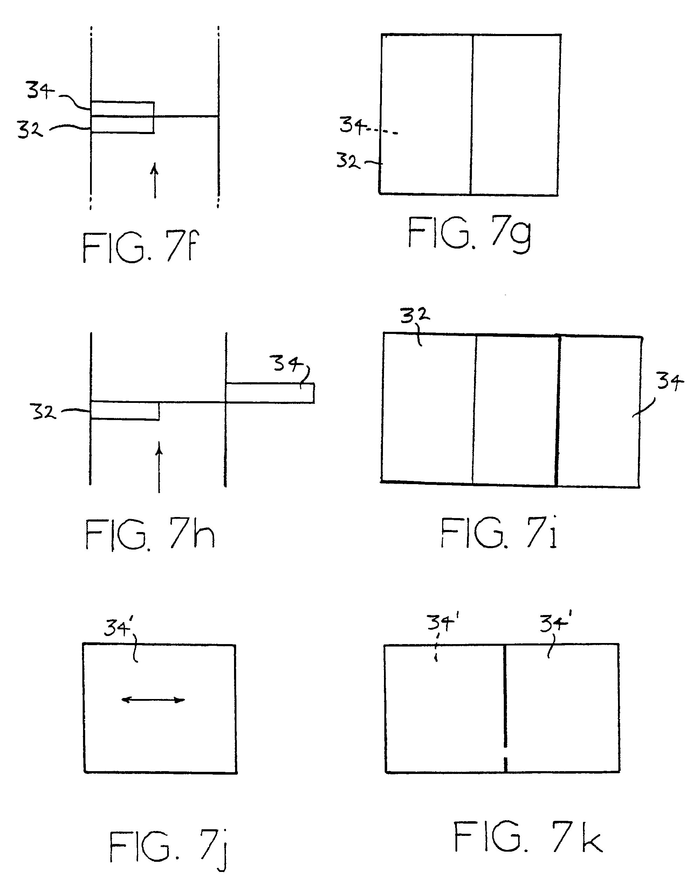

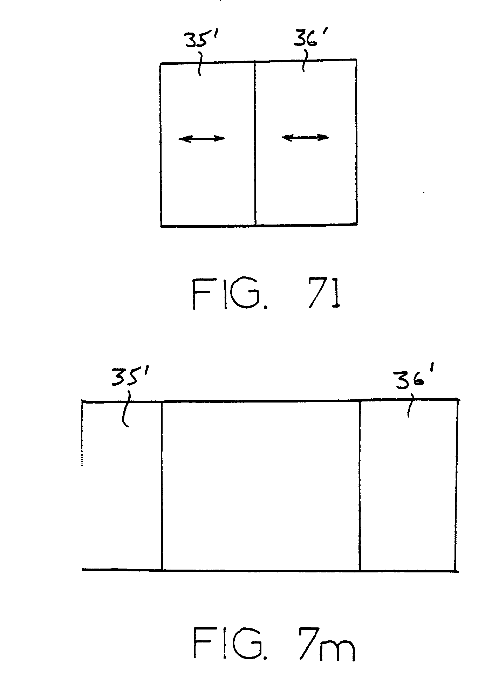

Thus, in accordance with the the present invention, the separating means is moved, by power applying means, in a direction other than that having a component in the direction of the pressure drop. Thus, in one example the separator may move directly opposite to the direction of air pressure (as described with respect to figures 3 and 4), in another it may move perpendicular to the direction of the air pressure (as described with respect to figure 7) or it may move in any direction between these two extreme directions, such as pivotally, as described with respect to figures 1 and 2.

An advantage of the present invention is that the air pressure cannot force the filter means into the open position. In a preferred embodiment, the power-applying means forces the separating means against the direction of the force applied to the separator by the moving air. Thus, when returning to its closed position, movement is assisted by the movement of the air.

The power-applying means may comprise at least one pneumatic, hydraulic or electric actuator or a manually-powered actuator, or any combination of such actuators. For example, a pneumatic, hydraulic or electric actuator, or actuators may be provided to move the separating means from one of the positions to the other and a manually-powered actuator or actuators may be provided to move the separating means in the reverse direction.

The mounting means may be a pivotally mounting means, eg., as described in U.S. patent number 4,312,645. Thus, the separating means may be rectangular and hinged, or pivoted, at one boundary surface or pivoted at opposite positions on opposite boundary surfaces intermediate the ends thereof.

Alternatively, the mounting means may be such that the separating means moves either axially, horizontally, vertically or rotationally between the first and second positions. Each of these possibilities is described in more detail below.

For axial movement, the separating means may be carried on tracks (eg., rods or rack and pinion) extending parallel to the direction of the air flow. When the separating means is mounted for axial movement, the power-applying means may move the separating means axially from its first to its second position in the opposite direction to the first direction (ie., against the air flow). Alternatively, the power-applying means may be arranged to move the separating means axially from its first to its second position in the same direction as the air flow (ie., in the first direction).

For horizontal movement, the separating means may be carried on tracks, (eg., rods or rack and pinion) extending horizontally transverse to the direction of the air flow. When the separating means is mounted for horizontal movement, the power-applying means may move the separating means from its first to its second position horizontally transverse to the direction of the air flow. The power-applying means may also move the separating means from its second position to its first position horizontally transverse to the direction of the air flow, although this could be achieved, if desired, by utilizing alternative power applying means such as, for example, a manually-powered actuator.

For vertical movement, the separating means may be carried on tracks, (eg., rods or rack and pinion) extending vertically transverse to the direction of the air flow. When the separating means is mounted for vertical movement, the power-applying means may move the separating from its first to its second position vertically transverse to the direction of the air flow. The power-applying means may also move the separating means from its second position to its first position vertically transverse to the direction of the air flow although, as with the horizontal movement embodiment described earlier, this could be achieved, if desired, by utilizing alternative power-applying means such as, for example, a manually-powered actuator.

For rotational movement, the separating means is not rectangular or square in cross-section but has a circular cross-section and may be carried on dual wheel frame means. The frame means may include the separating means as sectors of a circle mounted alternatively with open sectors of a circle having no separating means, in dual frames mounted axially and parallel, one behind the other such that the two wheel frame means may be rotated independently of each other transverse to the direction of the air flow, clockwise or counter-clockwise. When the separating means is mounted for rotational movement, the power-applying means moves the separating means rotationally on the axis of the wheel frame means from its first position to its second position rotationally transverse to the direction of the air flow, in either clockwise or counter-clockwise direction. The power-applying means may also move the separating means from its second position to its first position rotationally transverse to the direction of the air flow in either clockwise or counter-clockwise direction. Alternatively, the rotation from the second position to the first position may be achieved utilizing other power-applying means such as, for example, a manually-powered actuator. In the normal closed position, ie., the first position, the separating means mounted in the two dual wheel frame means are not axially aligned so that the sectors containing the separating means present a continuous separating means such that the air passing through the air duct passes through the separating means. The power-applying means may move one or both of the dual wheel frame means with the integrally included sectored separating means from its first to its second position rotationally transverse to the direction of the air flow, clockwise or counter-clockwise, and in the return direction, if desired, such that in the second position the sectored separating means of the one dual wheel frame means are physically located directly behind the sectored separating means of the second dual wheel frame means, such that there is a free passage of air flow through the exposed open sectors of both dual wheel frame means.

In a second form of rotational movement, the separating means mounted in a frame means may be of any required shape in cross-section to match the cross-section of the air intake air duct. In the normal closed position, ie., the first position, the separating means is located in the air intake air duct so that the separating means presents a continuous separating means such that the air passing through the air intake air duct passes through the separating means. The power-applying means moves the separating means rotationally on an axis located on the perimeter of the air duct and extending parallel to the direction of the air flow, from its first position to its second position rotationally transverse to the direction of the air flow, in either a clockwise or counter-clockwise direction. The power-applying means may also move the separating means from its second position to its first position rotationally transverse to the direction of the air flow in either a clockwise or counter-clockwise direction. Alternatively, the rotation from the second position to the first position may be achieved utilizing the other power-applying means such as, for example, a manually-powered actuator.

In all of the embodiments of the invention, the arrangement may be such that substantially all of the air passing through the air duct passes through said separating means. However, if desired, a further separating means may be provided operating in parallel with the first-mentioned separating means. In that case, the arrangement is such that substantially all of the air passing through the air duct passes through the first and further separating means. The further separating means will have mounting means and holding means as aforesaid, and means may be provided for applying power other than that of the air flow to the further separating means to force the further separating means to move in the first direction (ie., in the direction of the air flow) from its first position to its second position and in the reverse direction from its second position to its first position. If desired, a plurality of first and/or further separating means may be provided.

The separating means or each separating means is preferably supported in a frame by which it is mounted as aforesaid.

Usually, sensing means will be provided for sensing the pressure differential of the air across the separating means, the holding and power-applying means being operatively connected to the sensing means so that the holding and power-applying means are responsive to the sensing means sensing a pressure differential greater than a predetermined pressure difference to cause the movement of the separating means from its first position to its second position. Where a manually-powered actuator is provided, the sensing means may additionally or alternatively be arranged to provide a visible and/or audible signal to the operator.

Where appropriate, features of construction or operation described in U.S. patent number 4,312,645 may be used in carrying the present invention into effect. In light of this, the entire disclosure of U.S. patent number 4,312,645 is hereby incorporated by reference into the present case.

## BRIEF DESCRIPTION OF THE DRAWINGS

Embodiments of the present invention will now be described by way of example with reference to the accompanying drawings, in which :

Figure 1 is a side view of one embodiment of a separator assembly in its first (closed) position ;
Figure 2 is a side view of the separator assembly of Figure 1 in its second (open) position ;
Figure 3 is a side view of another embodiment of a separator assembly in its closed position ;
Figure 4 is a side view of the separator assembly of Figure 3 in its open position ;
Figure 5 is a side view of a further embodiment of a separator assembly in its closed position ;
Figure 6 is a side view of an alternative embodiment of the separator assembly of Figure 5 in its open position ;
Figure 6a is a side view of another embodiment of the separator assembly of Figure 5 in one of its open positions ;
Figures 7a through 7m are schematic representations of an alternative embodiment of a separator assembly of the invention ;
Figures 8a through 8m are schematic representations of another embodiment of a separator assembly of the present invention ;
Figures 9a, 9b, 9c and 9d are schematic representations of a yet further embodiment of a separator assembly of the invention ; and
Figures 10a through 10d are schematic representations of alternate embodiments of a separator assembly of the present invention.

## DETAILED DESCRIPTION OF THE INVENTION

In all of the illustrated and described embodiments, a separating means (10) is supported in a frame (11) with a peripheral sealing flange (12). The flange (12) can be seated against a gasket (13) round an opening (14) in a mounting member (15) in the form of a plate at the inlet entrance of an air inlet duct of a gas turbine (not shown). The direction of the air stream is indicated by an arrow (16).

In Figures 1 and 2, a frame (11) is pivoted to a mounting member (15) about an axis extending in a direction transverse to the direction of air flow by hinges (17) on an upper boundary surface (16) so that the frame can be swung from the closed position of Figure 1 to the open position of Figure 2. Alternatively, the hinges might be provided along a lower boundary surface or one of the side boundary surfaces of the frame. An actuator (18) (which may be pneumatic, hydraulic, electric or manually operated), or more than one actuator, is pivotably connected at its ends between supports (19), (20), on the frame (11) and mounting member (15), respectively, so that operation of the actuator(s) in one direction forces the separating means (10) to move against the air flow from the closed position of Figure 1 to the open position of Figure 2. Operation of the actuator(s) in the opposite direction forces the separating means to move from the open position to the closed position. The actuator(s) provides both a limit stop and the force necessary to maintain the separating means in the open position and a constant retention force to maintain the sealing flange (12) in sealing engagement with the gasket (13) in the closed position. The actuator(s) may, if desired, be disposed in different positions from those shown in the drawings. If desired, provision may be made for pneumatic, hydraulic or electric power movement of the separating means in one direction and manual power movement in the other direction or for manual power in both directions. Various different linkage mechanisms, such as four bar, parallel link, ball nut and screw and the like may be used to transmit operating power to the frame.

The embodiment of Figures 3 and 4 is constructed and operates in the same way as the assembly of Figures 1 and 2, except that the frame (11) is not pivotably mounted but is slidably mounted on parallel rods (21) extending at right angles to the mounting member (15). Parallel rods may be provided at one or more of the boundary surfaces of the frame (11), depending on size and conditions. In Figures 3 and 4, rods (21) are provided at two opposite boundary surfaces. Bearings or other low friction devices are provided on the frame to minimize friction with the rods. In this embodiment, pivotal connection of the actuator(s) to the frame and mounting member is, of course, not necessary.

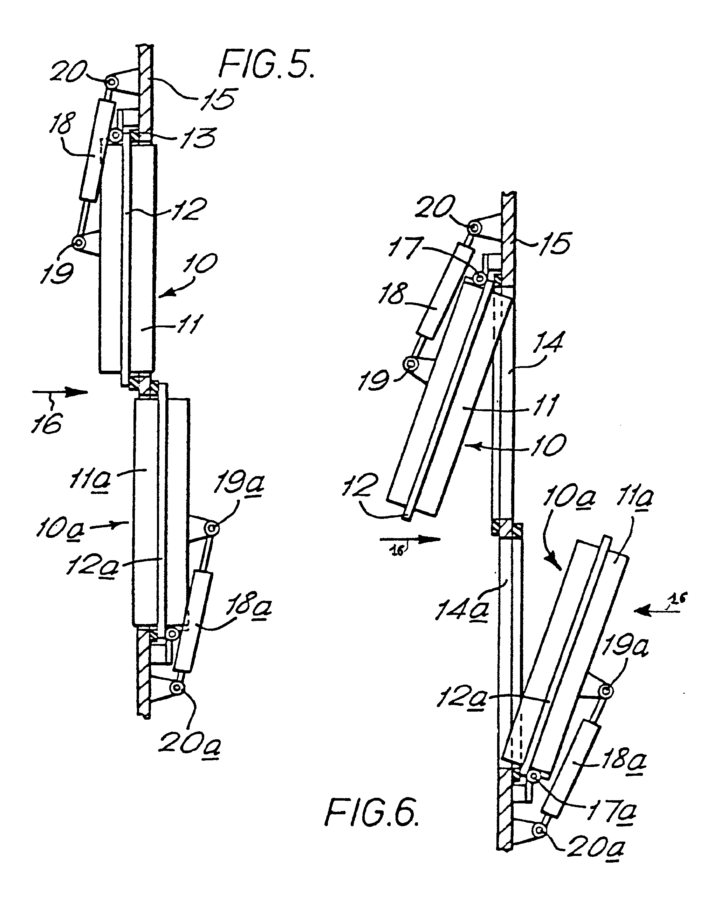

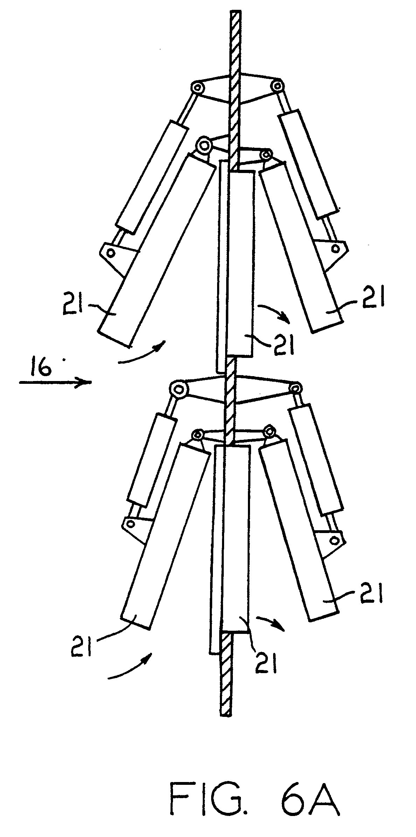

In the embodiment of Figures 5 and 6, a first separating member (10) is provided mounted and operated as in the embodiment of Figures 1 and 2, except that each actuator (18) extends downwardly instead of upwardly from support (20) on the mounting member (15) to support (19) on the frame. A second separating member (10a) is supported in a frame (11a) pivoted at its lower boundary surface by hinges (17a) to mounting member (15). The second separating member (10a), which is disposed below separating member (10) and associated with an opening (14a) below opening (14), is operated by actuator(s) (18a) by which it can be moved between closed and open positions. The two separating means may be moved simultaneously, separately, or one separating means may move while the second separating means may remain fixed.

Alternatively, and with specific reference to Figures 1 through 4, separating means (10) supported in frames (11), move from the first (closed) position to the second (open) position, against the air flow.

With specific reference to Figures 5 and 6, separating members (10) and (10a) supported in frames (11) and (11a), respectively, may move from the first (closed) position to the second (open) position, only against the air flow, and may move simultaneously or separately, such that :

a) Both frames move in the same direction against the air flow ;

b) Frame (11) remains fixed and frame (11a) moves in the direction against the air flow ;

c) Frame (11) moves in the direction against the air flow and frame (11a) remains fixed ; and

With reference to Figures 5 and 6, the separating members (10) and (10a) supported in frames (11) and (11a) may be located, optionally, in the same plane of the separator assembly, in a parallel plane of the separator assembly, or in a series of two or more parallel planes of the separator assembly, with each of the separating members (10) and (10a) arranged to move either as a complete assembly within the frames (11) and (11a), or in a split configuration where part of each separating member moves and part of each separating member remains fixed.

With further reference to Figure 6a, separating members (10) and (10a) may consist of two or more stages (21) supported in frames (11) and (11a), respectively. In operation, the first stage only of separating members (10) and (10a) may move from the first (closed) position to the second (open) position against the air flow. Additionally, the last stage only of separating members (10) and (10a) may move from the first (closed) position to the second (open) position with the air flow. Movement of the first stage against the air flow may be independent of movement of the last stage with the air flow, or both first and last stages of the separating members (10) and (10a) may move simultaneously. Optionally, the first stage, intermediate stage(s), if present, or the last stage, may be fixed while the remaining stage or stages may move, as previously described.

In further reference to Figures 5 and 6, each of the described separating members (10) and (10a) supported in frames (11) and (11a), respectively, may be pivoted to the mounting member (15) about an axis extending in a direction transverse to the direction of the air flow by hinges (17) and (17a) on any boundary surface such that the separating member(s) may be swung from the first (closed) position of Figure 5 to the second (open) position of Figure 6. Alternatively, the hinges might be provided along the upper boundary surface, the lower boundary surface, either of the side boundary surfaces, or one or more of the aforesaid boundary surfaces of the frame.

Figures 7a, 7b and 7c, are schematic top, front and side views of an embodiment of a separator assembly in its first (closed) position, with one fixed separator means (32) and one additional separator means (34) arranged for horizontal translation. In operation, the moveable separator means (34) moves to its second (open) position, either behind the fixed separator means (32) as shown in Figures 7f and 7g or into the wall of the air intake air duct, as shown in Figures 7h and 7i. In either the open or closed position, the separator assembly is horizontally transverse with respect to the direction of the air flow.

The fixed separator means (32) may be located, either as shown in Figures 7a, 7b and 7c, or may be opposite handed, with the fixed separator means mounted on the right as viewed in Figure 7a. In addition, the moveable separator means (34) may be located either before or after the fixed separator means, relative to the air flow.

Referring to Figures 7d and 7e, the fixed separator means (32) may optionally consist of one or more separator assemblies (33), located in left-handed (Figure 7d), right-handed (Figure 7d in dotted outline) or left to right diagonally arranged or right to left diagonally arranged (Figure 7e) configurations arranged with moveable separator means (35) of equal number, all collectively arranged horizontally transverse to the direction of the air flow.

Figures 7j through 7m show variations of the embodiment illustrated in Figure 7b. In Figure 7j, there is no fixed moisture separator, and one moveable moisture separator (34') is provided which moves between its first position (closed) as shown in Figure 7j and its open position as shown in Figure 7k. It will be appreciated that the moveable moisture separator (34') can move either to its left or its right into the air duct wall. In the variation shown in Figure 7l, there is, again, no fixed moisture separator, but instead two moveable moisture separators (35', 36') are provided in the duct which can each move left or right into the air duct wall, as shown in Figure 7m. A yet further possible variation is similar to that shown in Figures 7d and 7e, but with additional moisture separator means arranged in left-handed or right-handed configurations, or arranged left to right diagonally or right to left diagonally, and configured to permit all moisture separators to move separately or collectively.

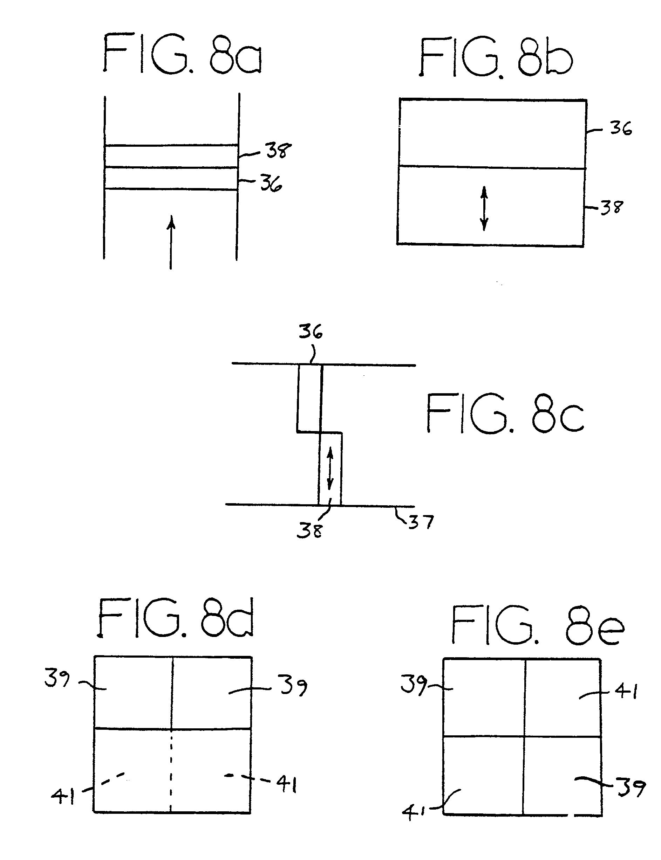

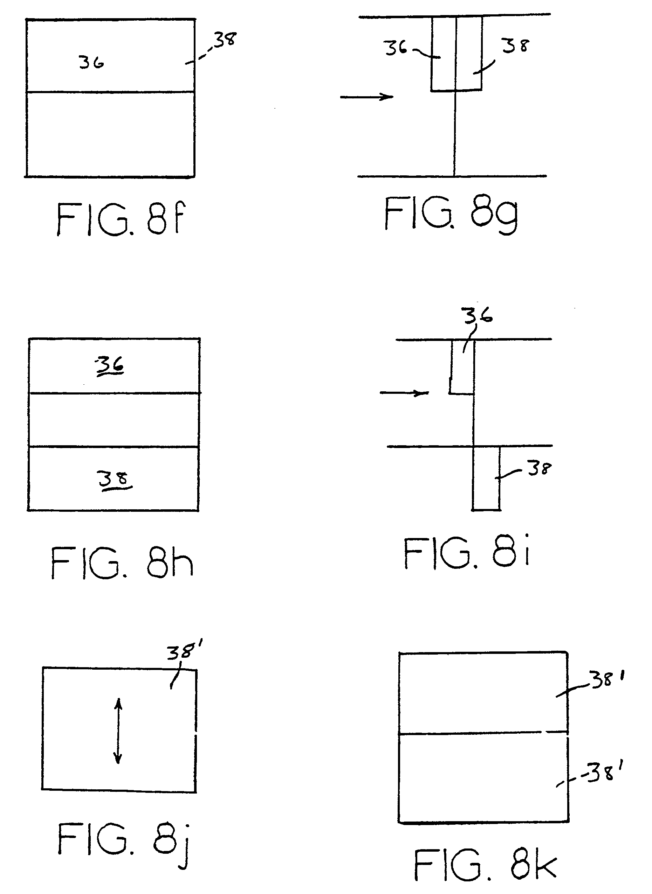

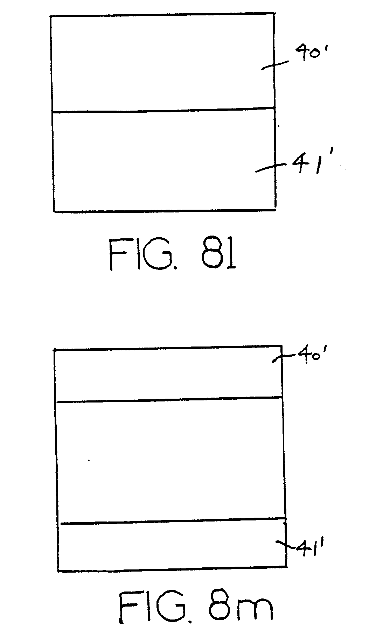

Figures 8a, 8b and 8c are schematic top, front and side views of another embodiment of a separator assembly in its first (closed) position, with one fixed separator means (36) and one additional separator means (38) arranged for vertical translation. In operation, the moveable separator means (38) moves to its second (open) position, either as shown in Figures 8f and 8g or into the wall of the air intake air duct, as shown in Figures 8h and 8i. In either position, the separator assembly would be vertically transverse with respect to the direction of the air flow.

The fixed separator means (36) may be located, either as shown in Figures 8a, 8b and 8c, or may be opposite handed, with the positions of fixed separator means and the moveable separator means as viewed in Figure 8c interchanged so that the fixed separator means is upstanding from a lower duct surface (37). In addition, the moveable separator means (38) may be located either before or after the fixed separator means, relative to the air flow.

Referring to Figures 8d and 8e, the fixed separator means (36) may optionally consist of one or more separator assemblies (39), located in upper-handed (Figure 8d), lower-handed (Figure 8d in dotted line) or left to right diagonally arranged or right to left diagonally arranged (Figure 8e) configurations, arranged with moveable separator means (41) of equal number, all collectively arranged vertically transverse to the direction of the air flow.

Figures 8j through 8m show variations of the embodiment illustrated in Figure 8b. In the embodiment of Figure 8j, there is no fixed moisture separator, and instead one moveable moisture separator (38') is shown which is moveable from its first closed position shown in Figure 8j to its second open position shown in Figure 8k. It will be appreciated that the moisture separator (38') can move either up or down into the air duct wall. The embodiment illustrated in Figure 8l again has no fixed moisture separator, but instead has two moveable moisture separators (40' and 41'). The two moveable moisture separators (40', 41') are shown in their first closed position in Figure 8l, and in their open position in Figure 8m, where the moisture separators have move upwardly and downwardly respectively into the air duct wall. A yet further possible variation is similar to the embodiment illustrated in Figures 8d and 8e, but with additional moisture separator means arranged in upper-handed or lower-handed configurations, or arranged left to right diagonally or right to left diagonally. In this possible variation, the moisture separator means are all arranged so that they may move separately or collectively.

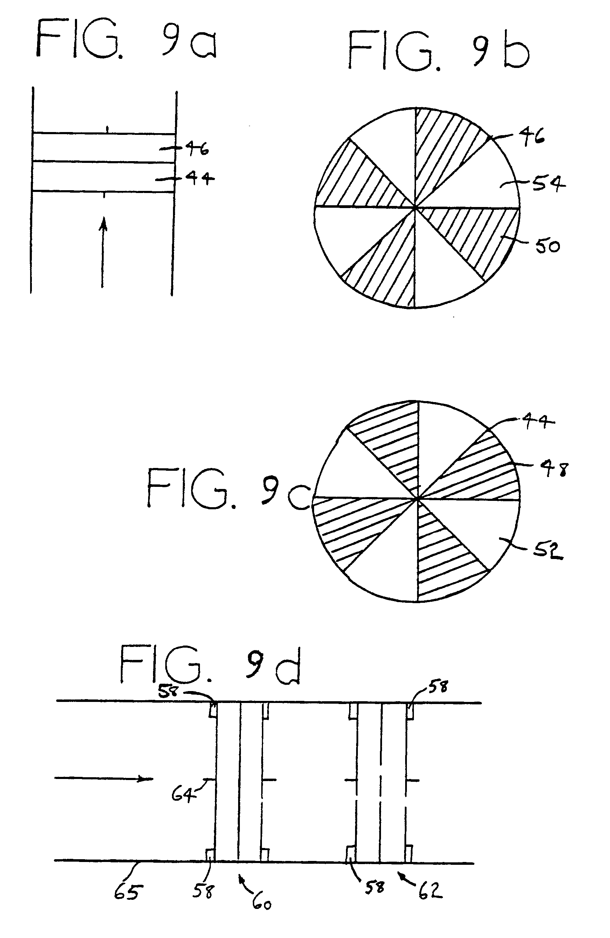

Figures 9a, 9b, 9c and 9d are schematic top, front and side views of another embodiment of a separator assembly with two identical sectored wheels (44) (46) each having an equal number of separator sectors (48) (50) and an equal number of open sectors (52) (54) arranged for rotational translation. In the first (closed) position, the separator sectors (48) (50) in each wheel, are non-axially aligned such that the separator sectors (48) (50) collectively present a continuous circular separator assembly transverse to the direction of the air flow. In order to achieve the second (open) position, one or the other wheel (44) (46) or both rotate, either clockwise or counter-clockwise, placing the separator sectors (48) of the one wheel directly behind the separator sectors (50) of the second wheel, and leaving the intervening open sectors (52) (54) open to the free passage of air bypassing the separator sectors (48, 50).

Alternatively, the dual sectored wheels may be arranged in any one of the following arrangements :

    a) Wheel (44) fixed with wheel (46) rotating clockwise ;

    b) Wheel (44) fixed with wheel (46) rotating counter-clockwise ;

    c) Wheel (44) fixed with wheel (46) rotating clockwise or counter-clockwise ;

    d) Wheel (44) rotating clockwise with wheel (46) rotating counter-clockwise ;

e) Wheel (44) rotating counter-clockwise with wheel (46) rotating clockwise ;

f) Wheel (46) fixed with wheel (44) rotating clockwise ;

g) Wheel (46) fixed with wheel (44) rotating counter-clockwise ; and

h) Wheel (46) fixed with wheel (44) rotating clockwise or counter-clockwise.

Optionally, as shown in Figure 9d the sectored wheels with separator means may consist of two or more separator assemblies (60, 62), located axially in series, and having a common axis (64) parallel to the direction of the air flow.

With specific reference to Figures 9a, 9b, 9c and 9d, duct work (65) carrying the incoming air to the circular separator assembly, may be circular or rectangular. In the latter case, corner fillets (58) will be required to seal the spaces between the rectangular duct and the circular separator assembly.

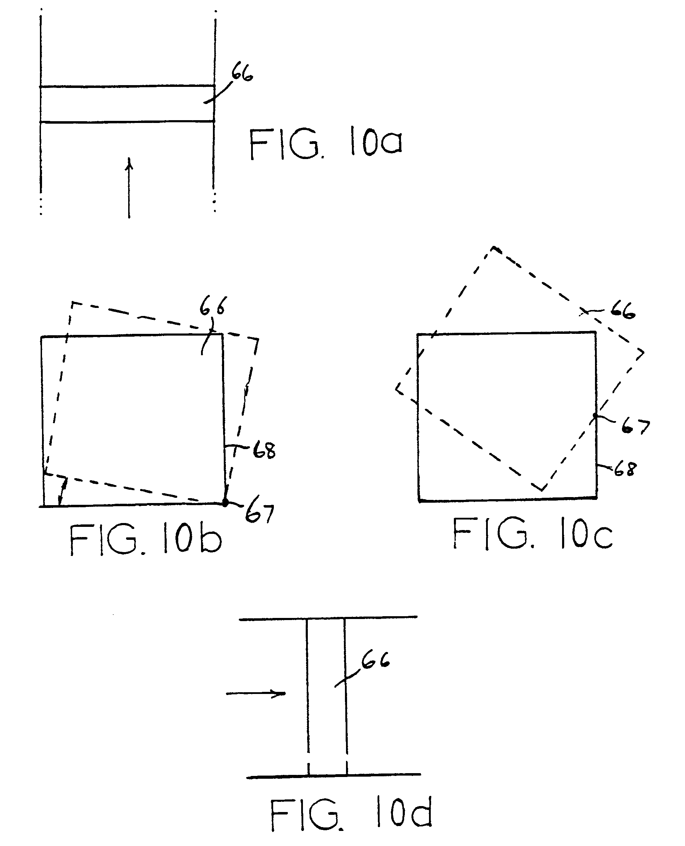

Figures 10a, 10b, 10c and 10d are views of an alternate embodiment of rotational translation of a separator assembly in its first (closed) position, with one moveable separator means (66) arranged for rotational translation about an axis (67) located in any boundary edge of the intake air duct wall (68), said separator means (66) having the axis of rotation parallel to the air flow. In operation, the moveable separator means (66) moves from its first (closed) position to its second (open) position on its axis, rotationally transverse to the direction of the air flow, in either a clockwise or counter-clockwise direction, into the air duct wall.

The power-applying means (18) may be pneumatic, hydraulic, electric or manually-powered actuators, used singly or in combination, mounted in various positions other than those shown.

In each embodiment, the pressure drop across the separating means (10) may be sensed with appropriate means, such as, for example, pressure sensors (22, 23) and a differential pressure switch or controller (24). If a high limit is reached, the actuator(s) (18) may be automatically operated to move the separating means into the open position, simultaneously, separately, or with an appropriate time delay means operating the actuator(s) sequentially.

It will be appreciated that the separating means in any of the embodiments as described in the present application may include vanes only, impactors only, coalescers only, or any combination of impactors, coalescers and vanes. It will be understood that a vane is an inertial device which causes a fluid stream, such as an air stream, to change direction, and thereby impart inertial energy to particles contained in the stream as a result of the change in direction. An impactor is a device for separating particles from a stream utilizing the impaction theory, and may, for example, include several layers of knitted mesh material which capture particles entrained in the stream as the stream passes through the impactor. A coalescer is a device which coalesces droplets in a stream to form larger droplets which then drop off the coalescer. By way of example, referring to Figure 6a, all of the stages (21) may be vanes only, coalescers only, or impactors only, or each of the stages (21) may be independently selected from vanes (or any other type of inertial device), impactors and/or coalescers. Thus, one or more of the vanes, impactors and/or coalescers may remain fixed when one or more of the stages move. These various combinations of separating means provide for maximum flexibility in the operation of separating means, and also protect against foreign matter dropping into the engine.

The gasket (13) may be fabricated of any suitable material (eg., silicone rubber, natural rubber, synthetic rubber, plastics or similar material) that will provide the required sealing surface. The gasket may, if desired, be heated to prevent ice formation and sticking at the seal interface.

Separator assemblies, in accordance with the invention, may be fabricated from any metal, plastics, synthetic or other material or combination of materials having suitable properties.

## Claims

1. An air duct separator assembly for removing particulate matter entrained in air passing through an air duct, wherein the duct is arranged to allow air flow in a first direction creating a pressure drop across said separator assembly, said separator assembly comprising, separating means (10) for removing particulate matter entrained in the air passing therethrough, mounting means (15, 17) for mounting said separating means relative to said air duct so as to be moveable between a first position in which substantially all of the air passes through said separating means and a second position in which a large proportion of said air by-passes said separating means, characterised in that said separating means is moveable from said first position by power-applying means (18) in a direction other than a direction having a component in the direction of the said pressure drop.

2. A separator assembly according to claim 1, wherein said power-applying means forces said separating means to move in a direction directly opposite to the direction of said pressure drop

3. A separator assembly according to claim 1, wherein said power-applying means also constitute a holding means.

4. A separator assembly according to claim 1, wherein said power-applying means is also operable to move said separating means from said second position to said first position.

5. A separator assembly according to claim 1, wherein said mounting means are pivotal mounting means.

6. A separator assembly according to claim 1, wherein said mounting means are such that said separating means moves axially between its first and second positions.

7. A separator assembly according to claim 6, wherein said separating means are carried on tracks extending parallel to said first direction of air flow.

8. A separator assembly according to claim 6, wherein said separating means is moved from its second position to its first position by the force of the airflow.

9. A separator assembly according to claim 1, wherein said mounting means are such that said separating means moves horizontally between its first and second positions in a direction transverse to said first direction.

10. A separator assembly according to claim 9, wherein said separating means includes at least one moveable separator member and at least one fixed separator member, said moveable separator member being moveable into said second position adjacent said fixed separator member.

11. A separator assembly according to claim 9, wherein said separating means includes at least one moveable separator which is moveable to said second position through a wall of said air duct.

12. A separator assembly according to claim 1, wherein said mounting means are such that said separating means moves vertically between its first and second positions in a direction transverse to said first direction.

13. A separator assembly according to claim 12, wherein said separating means includes at least one moveable separator member and at least one fixed separator member, said moveable separator member being moveable into said second position adjacent to said fixed separator member.

14. A separator assembly according to claim 12, wherein said separating means includes at least one moveable separator member which is moveable to said second position through a wall in said air duct.

15. A separator assembly according to claim 1, wherein said mounting means are such that said separating means is mounted for rotational movement between its first and second positions in a direction transverse to said first direction.

16. A separator assembly according to claim 15, wherein said separating means is mounted for said rotational movement on an axis located centrally in said duct and extending in a direction parallel to said first direction.

17. A separator assembly according to claim 15, wherein said separating means is mounted on wheel frame means for moving said separating means between its first and second positions.

18. A separator assembly according to claim 17, wherein said separating means are mounted in first and second rotatable wheel frames as equi-angularly disposed separator sectors, said separator sectors defining in their wheel frames an equal number of open sectors between said separator sectors, said first and second wheel frames being rotatable relative to each other transverse to said first direction to move said separator sectors between a first position in which said separator sectors in one wheel frame are axially aligned with the open sectors in the other wheel frame to form a complete circular separating means, and a second position in which said separating sectors in each wheel are axially aligned with each other to expose said open sectors so that air passing through said duct bypasses said separator sectors.

19. A separator assembly according to claim 15, wherein said separating means is mounted for said rotational movement on an axis located adjacent a perimeter of said air duct and extending parallel to said first direction.

20. A separator assembly according to claim 1, and including at least one further separating means.

21. A separator assembly according to claim 20, wherein said at least one further separating means is movable simultaneously with said separating means.

22. A separator assembly according to claim 20, wherein said at least one further separating means is moveable independently of said separating means.

23. A separator assembly according to claim 20, wherein one of said separating means and said at least one further separating means is moveable while the other remains stationary.

24. A separator assembly according to claim 20, wherein said separating means moves when a first predetermined pressure drop exists across said separating means so that air passing through said duct bypasses said separating means, and said at least one further separating means moves when a second predetermined pressure drop exists across said at least one further separating means so that air passing through said duct bypasses said at least one further separating means.

25. A separator assembly according to claim 20, wherein at least one of said separating means includes moveable separating members.

26. A separator assembly according to claim 25, wherein said separating members are moveable simultaneously with each other.

27. A separator assembly according to claim 25, wherein said separating members are moveable independently of each other.

28. A separator assembly according to claim 25, wherein a first separating member moves and a second separating member remains stationary when a first pressure drop exists across said first separating means so that air passing through said duct bypasses said first separating member and said second separating member moves when a second predetermined pressure drop exists across said second separating member so that air passing through said duct bypasses said second separating member.

29. A separator assembly according to claim 20, wherein said separating means and said at least one further separating means are disposed in a common plane in said duct.

30. A separator assembly according to claim 20, wherein said separating means and said at least one further separating means are disposed in parallel planes in said duct.

31. A separator assembly according to claim 1, wherein said separating means includes at least two separating members.

32. A separator assembly according to claim 31, wherein said separating members are moveable simultaneously with each other.

33. A separator assembly according to claim 31, wherein said separating members are moveable independently of each other.

34. A separator assembly according to claim 31, wherein a first separating member moves and a second separating member remains stationary when a first pressure drop exists across said first separating member so that air passing through said duct bypasses said first separating member, and said second separating member moves when a second predetermined pressure drop exists across said second separating member so that air passing through said duct bypasses said second separating member.

35. A separator assembly according to claim 31, wherein said separating members are moveable against said first direction.

36. A separator assembly according to claim 31, wherein one of said separating members moves against said first direction while another separating member remains stationary.

37. A separator assembly according to claim 31, wherein said separating members are mounted for pivotal movement from a first open position to a second closed position about an axis extending transverse to said first direction.

38. A separator assembly according to claim 37, wherein said separating members are mounted for pivotal movement about an axis on a boundary surface.

39. A separator assembly according to claim 20, wherein said further separating means operates in parallel with said separating means, the arrangement being such that substantially all of the air passing through said air duct passes through said separating means and said further separating means.

40. A separator assembly according to claim 39, wherein means are provided for applying power other than that of the air flow to said further separating means to force said further separating means to move in said first direction from its first position to its second position and in the reverse direction from its second position to its first position.

41. A separator assembly according to claim 1, wherein said separating means or each separating means is supported in a frame by which it is mounted.

42. A separator assembly according to claim 3, wherein sensing means are provided for sensing a pressure differential of air across said separating means.

43. A separator assembly according to claim 42, wherein said holding and power-applying are operatively connected to said sensing means so that said holding and power-applying means are responsive to said sensing means sensing a pressure differential greater than a predetermined pressure difference to cause said movement of said separating means from its first position to its second position.

44. A separator assembly according to claim 43, wherein said power-applying means includes a manually powered actuator and said sensing means is arranged to provide a visible and/or audible signal to an operator when the sensing means senses a pressure differential greater than a predetermined pressure difference.

45. A separator assembly according to claim 1, wherein said separating means includes one or more vanes.

46. A separator assembly according to claim 1, wherein said separating means includes one or more impactors.

47. A separator assembly according to claim 1, wherein said separating means includes one or more coalescers.

48. A separator assembly according to claim 1, wherein said separating means comprises one or more of a vane, an impactor and/or a coalescer.

49. A separator assembly according to claim 48, wherein one or more of said vane, impactor and/or coalescer is fixed, and one or more of said vane, impactor and/or coalescer is moveable.

50. A separator assembly according to claim 6, wherein said power-applying means moves said separating means against the power of the air flow from its first position to its second position in a direction opposite to said first direction.

## Revendications

1. Ensemble séparateur pour conduit d'air destiné à éliminer des matières particulaires entraînées dans de l'air passant dans un conduit d'air, dans lequel le conduit est prévu pour permettre l'écoulement d'un flux d'air dans un premier sens, créant une perte de charge à la traversée de l'ensemble séparateur, l'ensemble séparateur comprenant un dispositif séparateur (10) pour éliminer des matières particulaires entraînées dans l'air qui le traverse, des moyens de montage (15, 17) pour monter le dispositif séparateur par rapport au conduit d'air de telle sorte qu'il soit mobile entre une première position dans laquelle pratiquement la totalité de l'air traverse le dispositif séparateur et une seconde position dans laquelle une proportion importante de l'air contourne le dispositif séparateur, caractérisé en ce que le dispositif séparateur peut être déplacé à partir de la première position par un dispositif applicateur de force (18) dans un sens autre qu'un sens présentant une composante dans le sens de la perte de charge.

2. Ensemble séparateur suivant la revendication 1, dans lequel le dispositif applicateur de force déplace le dispositif séparateur dans un sens directement opposé au sens de la perte de charge.

3. Ensemble séparateur suivant la revendication 1, dans lequel le dispositif applicateur de force constitue également un dispositif de retenue.

4. Ensemble séparateur suivant la revendication 1, dans lequel le dispositif applicateur de force peut également être mis en oeuvre pour déplacer le dispositif séparateur de la seconde position vers la première.

5. Ensemble séparateur suivant la revendication 1, dans lequel les moyens de montage sont des moyens de montage à pivotement.

6. Ensemble séparateur suivant la revendication 1, dans lequel les moyens de montage sont tels que le dispositif séparateur se déplace axialement entre sa première et sa seconde position.

7. Ensemble séparateur suivant la revendication 6, dans lequel le dispositif séparateur est monté sur des glissières qui s'étendent parallèlement au premier sens d'écoulement du flux d'air.

8. Ensemble séparateur suivant la revendication 6, dans lequel le dispositif séparateur est déplacé de sa seconde position vers sa première par la force du flux d'air.

9. Ensemble séparateur suivant la revendication 1, dans lequel les moyens de montage sont tels que le dispositif séparateur se déplace horizontalement entre sa première et sa seconde position dans un sens transversal au premier sens.

10. Ensemble séparateur suivant la revendication 9, dans lequel le dispositif séparateur comprend au moins un élément séparateur mobile et au moins un élément séparateur fixe, l'élément séparateur mobile pouvant être amené dans la seconde position adjacente à l'élément séparateur fixe.

11. Ensemble séparateur suivant la revendication 9, dans lequel le dispositif séparateur comprend au moins un séparateur mobile qui peut être amené dans la seconde position à travers une paroi du conduit d'air.

12. Ensemble séparateur suivant la revendication 1, dans lequel les moyens de montage sont tels que le dispositif séparateur se déplace verticalement entre sa première et sa seconde position, dans un sens transversal au premier sens.

13. Ensemble séparateur suivant la revendication 12, dans lequel le dispositif séparateur comprend au moins un élément séparateur mobile et au moins un élément séparateur fixe, l'élément séparateur mobile pouvant être amené dans la seconde position adjacente à l'élément séparateur fixe.

14. Ensemble séparateur suivant la revendication 12, dans lequel le dispositif séparateur comprend au moins un élément séparateur mobile qui peut être déplacé vers à la seconde position à travers une paroi du conduit d'air.

15. Ensemble séparateur suivant la revendication 1, dans lequel les moyens de montage sont tels que le dispositif séparateur est monté à rotation entre sa première et sa seconde position, dans un sens transversal au premier sens.

16. Ensemble séparateur suivant la revendication 15, dans lequel le dispositif séparateur est monté de manière à tourner autour d'un axe centré dans le conduit et s'étendant dans un sens parallèle au premier sens.

17. Ensemble séparateur suivant la revendication 15, dans lequel le dispositif séparateur est monté sur des disques de roue en vue du déplacement du dispositif séparateur entre sa première et sa seconde position.

18. Ensemble séparateur suivant la revendication 17, dans lequel le dispositif séparateur est monté dans un premier et un second disque de roue tournant sous la forme de secteurs séparateurs disposés à angles égaux, les secteurs séparateurs définissant, dans leurs disques de roue, un nombre égal de secteurs ouverts entre les secteurs séparateurs, le premier et le second disque de roue pouvant tourner l'un par rapport à l'autre transversalement au premier sens pour déplacer les secteurs séparateurs entre une première position dans laquelle les secteurs séparateurs dans un disque de roue sont alignés axialement avec les secteurs ouverts dans l'autre disque de roue pour former un dispositif séparateur circulaire complet, et une seconde position dans laquelle les secteurs séparateurs dans chaque roue sont axialement alignés l'un avec l'autre pour exposer les secteurs ouverts, de telle sorte que l'air passant dans le conduit contourne les secteurs séparateurs.

19. Ensemble séparateur suivant la revendication 15, dans lequel le dispositif séparateur est monté de manière que le mouvement de rotation s'effectue autour d'un axe adjacent à un périmètre du conduit d'air et parallèle au premier sens.

20. Ensemble séparateur suivant la revendication 1, comprenant au moins un autre dispositif séparateur.

21. Ensemble séparateur suivant la revendication 20, dans lequel ledit au moins un autre dispositif séparateur peut être déplacé en même temps que le dispositif séparateur.

22. Ensemble séparateur suivant la revendication 20, dans lequel ledit au moins un autre dispositif séparateur peut être déplacé indépendamment du dispositif séparateur.

23. Ensemble séparateur suivant la revendication 20, dans lequel un dispositif, parmi le dispositif séparateur et ledit au moins un autre dispositif séparateur, est mobile tandis que l'autre reste fixe.

24. Ensemble séparateur suivant la revendication 20, dans lequel le dispositif séparateur se déplace lorsqu'une première perte de charge prédéterminée existe à la traversée du dispositif séparateur, de sorte que l'air traversant le conduit contourne le dispositif séparateur, et ledit au moins un autre dispositif séparateur se déplace lorsqu'une seconde perte de charge prédéterminée existe à la traversée dudit au moins un autre dispositif séparateur, de sorte que l'air s'écoulant dans le conduit contourne ledit au moins un autre dispositif séparateur.

25. Ensemble séparateur suivant la revendication 20, dans lequel au moins un des dispositifs séparateurs comprend des éléments séparateurs mobiles.

26. Ensemble séparateur suivant la revendication 25, dans lequel les éléments séparateurs sont mobiles simultanément.

27. Ensemble séparateur suivant la revendication 25, dans lequel les éléments séparateurs sont mobiles indépendamment l'un de l'autre.

28. Ensemble séparateur suivant la revendication 25, dans lequel un premier élément séparateur se déplace et un second élément séparateur reste fixe lorsqu'une première perte de charge existe à la traversée du premier dispositif séparateur, de sorte que l'air passant dans le conduit contourne le premier élément séparateur et le second élément séparateur se déplace lorsqu'une seconde perte de charge prédéterminée existe à la traversée du second élément séparateur, de sorte que l'air passant dans le conduit contourne le second élément séparateur.

29. Ensemble séparateur suivant la revendication 20, dans lequel le dispositif séparateur et ledit au moins un autre dispositif séparateur sont disposés dans un plan commun dans le conduit.

30. Ensemble séparateur suivant la revendication 20, dans lequel le dispositif séparateur et ledit au moins un autre dispositif séparateur sont disposés dans des plans parallèles dans le conduit.

31. Ensemble séparateur suivant la revendication 1, dans lequel le dispositif séparateur comprend au moins deux éléments séparateurs.

32. Ensemble séparateur suivant la revendication 31, dans lequel les éléments séparateurs sont mobiles simultanément.

33. Ensemble séparateur suivant la revendication 31, dans lequel les éléments séparateurs sont mobiles indépendamment l'un de l'autre.

34. Ensemble séparateur suivant la revendication 31, dans lequel un premier élément séparateur se déplace et un second élément séparateur reste fixe lorsqu'une première perte de charge existe à la traversée du premier élément séparateur, de sorte que l'air qui passe dans le conduit contourne le premier élément séparateur, et le second élément séparateur se déplace lorsqu'une seconde perte de charge prédéterminée existe à la traversée du second élément séparateur, de sorte que l'air passant dans le conduit contourne le second élément séparateur.

35. Ensemble séparateur suivant la revendication 31, dans lequel les éléments séparateurs sont mobiles dans un sens contraire au premier sens.

36. Ensemble séparateur suivant la revendication 31, dans lequel un des éléments séparateurs se déplace dans un sens contraire au premier sens, tandis qu'un autre élément séparateur reste fixe.

37. Ensemble séparateur suivant la revendication 31, dans lequel les éléments séparateurs sont montés de manière à pivoter d'une première position ouverte vers une seconde position fermée autour d'un axe transversal au premier sens.

38. Ensemble séparateur suivant la revendication 37, dans lequel les éléments séparateurs sont montés de manière à pivoter autour d'un axe sur une surface de délimitation.

39. Ensemble séparateur suivant la revendication 20, dans lequel ledit autre dispositif séparateur fonctionne en parallèle avec le dispositif séparateur, l'agencement étant tel qu'en substance la totalité de l'air passant dans le conduit d'air traverse le dispositif séparateur et ledit autre dispositif séparateur.

40. Ensemble séparateur suivant la revendication 39, dans lequel des moyens sont prévus pour appliquer une force autre que celle du flux d'air audit autre dispositif séparateur afin de forcer ledit autre dispositif séparateur à se déplacer dans le premier sens de sa première position vers sa seconde position et dans le sens inverse de sa seconde position vers sa première position.

41. Ensemble séparateur suivant la revendication 1, dans lequel le dispositif séparateur ou chacun d'eux est supporté dans un cadre par lequel il est monté.

42. Ensemble séparateur suivant la revendication 3, dans lequel des moyens de détection sont prévus pour détecter une différence de pression d'air à la traversée du dispositif séparateur.

43. Ensemble séparateur suivant la revendication 42, dans lequel les dispositifs de retenue et d'application de force sont reliés activement aux moyens de détection, de sorte que les dispositifs de retenue et d'application de force sont sensibles à la détection par les moyens de détection d'une différence de pression supérieure à une différence de pression prédéterminée afin de provoquer le déplacement du dispositif séparateur de sa première position vers sa seconde.

44. Ensemble séparateur suivant la revendication 43, dans lequel le dispositif applicateur de force comprend un actionneur à main et le moyen de détection est destiné à fournir un signal visible et/ou audible à un opérateur lorsqu'il détecte une différence de pression supérieure à une différence de pression prédéterminée.

45. Ensemble séparateur suivant la revendication 1, dans lequel le dispositif séparateur comprend une ou plusieurs aubes.

46. Ensemble séparateur suivant la revendication 1, dans lequel le dispositif séparateur comprend un ou plusieurs impacteurs.

47. Ensemble séparateur suivant la revendication 1, dans lequel le dispositif séparateur comprend un ou plusieurs coalesceurs.

48. Ensemble séparateur suivant la revendication 1, dans lequel le dispositif séparateur comprend un ou plusieurs organes du type aube, impacteur et/ou coalesceur.

49. Ensemble séparateur suivant la revendication 48, dans lequel un ou plusieurs éléments du type aube, impacteur et/ou coalesceur sont fixes, et un ou plusieurs éléments du type aube, impacteur et/ou coalesceur sont mobiles.

50. Ensemble séparateur suivant la revendication 6, dans lequel le dispositif applicateur de force déplace le dispositif séparateur à l'encontre de la sollicitation du flux d'air de sa première position vers sa seconde position dans un sens opposé au premier sens.

## Ansprüche

1. Luftkanal-Separatorvorrichtung zum Abscheiden von in durch einen Luftkanal strömender Luft mitgeführtem Partikelmaterial, wobei der Luftkanal angeordnet ist, um eine Luftströmung in einer ersten Richtung, die einen Druckabfall über die genannte Separatorvorrichtung hinweg erzeugt, zu ermöglichen, und die genannte Separatorvorrichtung eine Trenneinrichtung (10) zur Abscheidung von in der durch diese hindurch strömenden Luft mitgeführtem Partikelmaterial sowie Montageeinrichtungen (15, 17) zur Lagerung der erwähnten Trenneinrichtung mit Bezug zu dem besagten Luftkanal, so daß diese zwischen einer ersten Position, in welcher im wesentlichen die gesamte Luft durch die erwähnte Trenneinrichtung strömt, und einer zweiten Position, in welcher ein großer Anteil dieser Luft die erwähnte Trenneinrichtung umgeht, bewegbar ist, umfaßt, dadurch gekennzeichnet, daß die erwähnte Trenneinrichtung aus der genannten ersten Position heraus durch eine eine Kraft aufbringende Einrichtung (18) in einer zu einer Richtung, die eine Komponente in der Richtung des besagten Druckabfalls aufweist, unterschiedlichen Richtung bewegbar ist.

2. Separatorvorrichtung nach Anspruch 1, wobei die genannte, eine Kraft aufbringende Einrichtung die erwähnte Trenneinrichtung zu einer Bewegung in einer direkt der Richtung des besagten Druckabfalls entgegengesetzten Richtung Zwingt.

3. Separatorvorrichtung nach Anspruch 1, wobei die genannte, eine Kraft aufbringende Einrichtung auch eine Halteeinrichtung bildet.

4. Separatorvorrichtung nach Anspruch 1, wobei die genannte, eine Kraft aufbringende Einrichtung auch betätigbar ist, um die erwähnte Trenneinrichtung von der besagten zweiten Position zu der besagten ersten Position zu bewegen.

5. Separatorvorrichtung nach Anspruch 1, wobei die genannten Montageeinrichtungen gelenkige Lagereinrichtungen sind.

6. Separatorvorrichtung nach Anspruch 1, wobei die genannten Montageeinrichtungen derart ausgebildet sind, daß sich die erwähnte Trenneinrichtung axial zwischen ihren ersten und zweiten Positionen bewegt.

7. Separatorvorrichtung nach Anspruch 6, wobei die erwähnte Trenneinrichtung auf Schienen gelagert ist, die sich parallel zu der besagten ersten Richtung einer Luftströmung erstrecken.

8. Separatorvorrichtung nach Anspruch 6, wobei die erwähnte Trenneinrichtung von ihrer zweiten Position zu ihrer ersten Position durch die Kraft des Luftstroms bewegt wird.

9. Separatorvorrichtung nach Anspruch 1, wobei die genannten Montageeinrichtungen derart ausgebildet sind, daß sich die erwähnte Trenneinrichtung horizontal zwischen ihren ersten und zweiten Positionen in einer zur besagten ersten Richtung quer verlaufenden Richtung bewegt.

10. Separatorvorrichtung nach Anspruch 9, wobei die erwähnte Trenneinrichtung wenigstens ein bewegbares Trennelement und wenigstens ein ortsfestes Trennelement enthält, wobei das genannte bewegbare Trennelement in die besagte zweite Position angrenzend an das ortsfeste Trennelement bewegbar ist.

11. Separatorvorrichtung nach Anspruch 9, wobei die erwähnte Trenneinrichtung wenigstens ein bewegbares Trennelement enthält, das in die besagte zweite Position durch eine Wand des genannten Luftkanals hindurch bewegbar ist.

12. Separatorvorrichtung nach Anspruch 1, wobei die genannten Montageeinrichtungen derart ausgebildet sind, daß sich die erwähnte Trenneinrichtung vertikal zwischen ihren ersten und zweiten Positionen in einer zur besagten ersten Richtung quer verlaufenden Richtung bewegt.

13. Separatorvorrichtung nach Anspruch 12, wobei die erwähnte Trenneinrichtung wenigstens ein bewegbares Trennelement und wenigstens ein ortsfestes Trennelement enthält, wobei das genannte bewegbare Trennelement in die besagte zweite Position angrenzend an das genannte ortsfeste Trennelement bewegbar ist.

14. Separatorvorrichtung nach Anspruch 12, wobei die erwähnte Trenneinrichtung wenigstens ein bewegbares Trennelement enthält, das in die besagte zweite Position durch eine Wand in dem genannten Luftkanal hindurch bewegbar ist.

15. Separatorvorrichtung nach Anspruch 1, wobei die genannten Montageeinrichtungen derart ausgebildet sind, daß die erwähnte Trenneinrichtung für eine Drehbewegung zwischen ihren ersten und zweiten Positionen in einer zur besagten ersten Richtung quer verlaufenden Richtung gelagert ist.

16. Separatorvorrichtung nach Anspruch 15, wobei die erwähnte Trenneinrichtung für die besagte Drehbewegung an einer zentral in dem genannten Kanal angeordneten und sich in einer zur besagten ersten Richtung parallelen Richtung erstreckenden Achse gelagert ist.

17. Separatorvorrichtung nach Anspruch 15, wobei die erwähnte Trenneinrichtung an einem Kreisscheibenrahmen für eine Bewegung der erwähnten Trenneinrichtung zwischen ihren ersten und zweiten Positionen gelagert ist.

18. Separatorvorrichtung nach Anspruch 17, wobei die erwähnten Trenneinrichtungen in ersten und zweiten drehbaren Kreisscheibenrahmen als mit gleichem Winkelabstand angeordnete Separatorsektoren gelagert sind, welche in ihren Kreisscheibenrahmen eine gleiche Anzahl von offenen Sektoren zwischen diesen Separatorsektoren abgrenzen, wobei die besagten ersten und zweiten Kreisscheibenrahmen mit Bezug zueinander quer zu der genannten ersten Richtung drehbar sind, um die erwähnten Separatorsektoren zwischen einer ersten Position, in welcher die erwähnten Separatorsektoren im einen Kreisscheibenrahmen axial mit den offenen Sektoren in dem anderen Kreisscheibenrahmen ausgerichtet sind, um eine vollständige, kreisförmige Trenneinrichtung zu bilden, und einer zweiten Position, in welcher die erwähnten Separatorsektoren in jedem Kreisscheibenrahmen axial miteinander ausgerichtet sind, um die offenen Sektoren freizulegen, so daß durch den besagten Kanal strömende Luft die erwähnte Trenneinrichtung umgeht, zu bewegen.

19. Separatorvorrichtung nach Anspruch 15, wobei die erwähnte Trenneinrichtung für die besagte Drehbewegung an einer angrenzend an einen Umfang des genannten Luftkanals angeordneten und sich parallel zu der besagten ersten Richtung erstreckenden Achse gelagert ist.

20. Separatorvorrichtung nach Anspruch 1, die wenigstens eine weitere Trenneinrichtung enthält.

21. Separatorvorrichtung nach Anspruch 20, wobei die besagte, wenigstens eine weitere Trenneinrichtung gleichzeitig mit der erwähnten Trenneinrichtung bewegbar ist.

22. Separatorvorrichtung nach Anspruch 20, wobei die besagte, wenigstens eine weitere Trenneinrichtung unabhängig von der erwähnten Trenneinrichtung bewegbar ist.

23. Separatorvorrichtung nach Anspruch 20, wobei die eine von der erwähnten Trenneinrichtung und von der besagten, wenigstens einen weiteren Trenneinrichtung bewegbar ist, während die andere stationär bleibt.

24. Separatorvorrichtung anch Anspruch 20, wobei sich die erwähnte Trenneinrichtung bewegt, wenn ein erster vorbestimmter Druckabfall über die erwähnte Trenneinrichtung hinweg vorhanden ist, so daß durch den genannten Kanal strömende Luft die erwähnte Trenneinrichtung umgeht, und die besagte, wenigstens eine weitere Trenneinrichtung sich bewegt, wenn ein zweiter vorbestimmter Druckabfall über diese wenigstens eine weitere Trenneinrichtung hinweg vorhanden ist, so daß durch den genannten Kanal strömende Luft die besagte, wenigstens eine weitere Trenneinrichtung umgeht.

25. Separatorvorrichtung nach Anspruch 20, wobei wenigstens eine der erwähnten Trenneinrichtungen bewegbare Trennelemente enthält.

26. Separatorvorrichtung nach Anspruch 25, wobei die genannten Trennelemente gleichzeitig miteinander bewegbar sind.

27. Separatorvorrichtung nach Anspruch 25, wobei die genannten Trennelemente unabhängig voneinander bewegbar sind.

28. Separatorvorrichtung nach Anspruch 25, wobei ein erstes Trennelement sich bewegt und ein zweites Trennelement stationär bleibt, wenn ein erster Druckabfall über die erwähnte erste Trenneinrichtung hinweg vorhanden ist, so daß durch den besagten Kanal strömende Luft die erwähnte erste Trenneinrichtung umgeht, und das genannte zweite Trennelement sich bewegt, wenn ein zweiter vorbestimmter Druckabfall über die erwähnte zweite Trenneinrichtung hinweg vorhanden ist, so daß durch den besagten Kanal strömende Luft die erwähnte zweite Trenneinrichtung umgeht.

29. Separatorvorrichtung nach Anspruch 20, wobei die erwähnte Trenneinrichtung und die besagte, wenigstens eine weitere Trenneinrichtung in einer gemeinsamen Ebene in dem genannten Kanal angeordnet sind.

30. Separatorvorrichtung nach Anspruch 20, wobei die erwähnte Trenneinrichtung und die besagte, wenigstens eine weitere Trenneinrichtung in parallelen Ebenen in dem genannten Kanal angeordnet sind.

31. Separatorvorrichtung nach Anspruch 1, wobei die erwähnte Trenneinrichtung wenigstens zwei Trennelemente enthält.

32. Separatorvorrichtung nach Anspruch 31, wobei die genannten Trennelemente gleichzeitig miteinander bewegbar sind.

33. Separatorvorrichtung nach Anspruch 31, wobei die genannten Trennelemente unabhängig voneinander bewegbar sind.

34. Separatorvorrichtung anch Anspruch 31, wobei ein erstes Trennelement sich bewegt und ein zweites Trennelement stationär bleibt, wenn ein erster Druckabfall über das genannte erste Trennelement vorhanden ist, so daß durch den besagten Kanal strömende Luft das genannte erste Trennelement umgeht, und das genannte zweite Trennelement sich bewegt, wenn ein zweiter vorbestimmter Druckabfall über das genannte zweite Trennelement hinweg vorhanden ist, so daß durch den besagten Kanal strömende Luft das genannte zweite Trennelement umgeht.

35. Separatorvorrichtung nach Anspruch 31, wobei die genannten Trennelemente gegen die besagte erste Richtung bewegbar sind.

36. Separatorvorrichtung nach Anspruch 31, wobei eines der genannten Trennelemente sich gegen die besagte erste Richtung bewegt, während ein anderes Trennelement stationär bleibt.

37. Separatorvorrichtung nach Anspruch 31, wobei die genannten Trennelemente für eine Schwenkbewegung aus einer ersten, offenen Position in eine zweite, geschlossene Position um eine quer zu der besagten ersten Richtung sich erstreckende Achse gelagert sind.

38. Separatorvorrichtung nach Anspruch 37, wobei die genannten Trennelemente für eine Schwenkbewegung um eine Achse an einer Begrenzungsfläche gelagert sind.

39. Separatorvorrichtung nach Anspruch 20, wobei die besagte weitere Trenneinrichtung parallel mit der erwähnten Trenneinrichtung arbeitet und die Anordnung so getroffen ist, daß im wesentlichen die gesamte, durch den besagten Luftkanal strömende Luft durch die erwähnte Trenneinrichtung sowie die besagte weitere Trenneinrichtung tritt.

40. Separatorvorrichtung nach Anspruch 39, wobei Einrichtungen vorgesehen sind, die eine Kraft außer derjenigen des Luftstroms auf die besagte weitere Trenneinrichtung aufbringen, um diese weitere Trenneinrichtung zu einer Bewegung in der besagten ersten Richtung von ihrer zweiten Position zu ihrer ersten Position zu bringen.

41. Separatorvorrichtung nach Anspruch 1, wobei die erwähnte Trenneinrichtung oder jede Trenneinrichtung in einem Rahmen abgestützt ist, durch den sie gelagert ist.

41. Separatorvorrichtung nach Anspruch 3, wobei Fühleinrichtungen vorgesehen sind, um ein Druckdifferential der Luft über die erwähnte Trenneinrichtung hinweg zu erfassen.

43. Separatorvorrichtung nach Anspruch 42, wobei die Einrichtungen zum Halten und Aufbringen einer Kraft mit den erwähnten Fühleinrichtungen in Wirkverbindung stehen, so daß die Einrichtungen zum Halten und Aufbringen einer Kraft auf die Fühleinrichtungen, welche ein Druckdifferential erfassen, das größer als ein vorbestimmter Druckunterschied ist, ansprechen, um die genannte Bewegung der erwähnten Trenneinrichtung von ihrer ersten Position zu ihrer zweiten Position herbeizuführen.

44. Separatorvorrichtung nach Anspruch 43, wobei die Einrichtung zum Aufbringen einer Kraft einen von Hand betätigten Stellantrieb enthält, und die Fühleinrichtungen dazu ausgebildet sind, ein sichtbares und/oder hörbares Signal für eine Bedienungsperson zu erzeugen, wenn die Fühleinrichtungen ein Druckdifferential erfassen, das größer als ein vorbestimmter Druckunterschied ist.

45. Separatorvorrichtung nach Anspruch 1, wobei die erwähnte Trenneinrichtung einen oder mehrere Schaufelkörper enthält.

46. Signalvorrichtung nach Anspruch 1, wobei die erwähnte Trenneinrichtung einen oder mehrere Aufprallkörper enthält.

47. Separatorvorrichtung nach Anspruch 1, wobei die erwähnte Trenneinrichtung einen oder mehrere Koaleszenzkörper enthält.

48. Separatorvorrichtung nach Anspruch 1, wobei die Trenneinrichtung einen oder mehrere eines Schaufelkörpers, eines Aufprallkörpers und/oder eines Koaleszenzkörpers enthält.

49. Separatorvorrichtung nach Anspruch 48, wobei einer oder mehrere der Schaufelkörper, Aufprallkörper und/oder Koaleszenzkörper fest sind und einer oder mehrere der Schaufelkörper, Aufprallkörper und/oder Koaleszenzkörper bewegbar sind.

50. Separatorvorrichtung nach Anspruch 6, wobei die Einrichtung zum Aufbringen einer Kraft die erwähnte Trenneinrichtung gegen die Kraft des Luftstroms von ihrer ersten Position in ihre zweite Position in einer zur genannten ersten Richtung entgegengesetzten Richtung bewegt.

FIG.1.

FIG.2.

FIG.3.

FIG.4.

FIG.5.

FIG.6.

FIG. 6A

# FIG. 7a

# FIG. 7b

# FIG. 7c

# FIG. 7d

# FIG. 7e

FIG. 7f

FIG. 7g

FIG. 7h

FIG. 7i

FIG. 7j

FIG. 7k

35'      36'

FIG. 7l

35'      36'

FIG. 7m

# FIG. 8a

38

36

# FIG. 8b

36

38

36

FIG. 8c

38    37

# FIG. 8d

39    39

41    41

# FIG. 8e

39    41

41    39

FIG. 8f

FIG. 8g

FIG. 8h

FIG. 8i

FIG. 8j

FIG. 8k

FIG. 8l

FIG. 8m

# FIG. 9a

# FIG. 9b

# FIG. 9c

# FIG. 9d

FIG. 10a

FIG. 10b

FIG. 10c

FIG. 10d